# EUROPÄISCHE PATENTSCHRIFT

(11) **EP 2 369 066 B1**
(45) Veröffentlichungstag und Bekanntmachung des Hinweises auf die Patenterteilung: **19.07.2017**
(21) Anmeldenummer: 11001631.8
(22) Anmeldetag: 28.02.2011
(51) Int. Cl.: E02F 9/20, E01C 23/088, B60N 2/46

(54) **Bedienerarbeitsplatz einer Baumaschine**
Operator's station of a construction machine
Poste de travail d'utilisateur d'un engin

(30) Priorität: 26.03.2010 DE 102010013041
(43) Veröffentlichungstag der Anmeldung: 28.09.2011
(73) Patentinhaber: BOMAG GmbH, 56154 Boppard (DE)
(72) Erfinder: Klein, Thomas, 56653 Wehr (DE); Haubrich, Thomas, 56290 Gödenroth (DE)
(74) Vertreter: Lang, Friedrich

(56) Entgegenhaltungen:
- DE-A1- 19 701 388
- JP-U- H0 483 921
- US-A1- 2006 061 122

## Beschreibung

Die Erfindung betrifft einen Bedienarbeitsplatz für eine Baumaschine, insbesondere eine Fräsmaschine zur Bearbeitung der Straßenoberfläche, sowie eine Baumaschine, insbesondere eine Fräsmaschine zur Bearbeitung der Straßenoberfläche, mit einem solchen Bedienarbeitsplatz.

Gattungsgemäße Bedienarbeitsplätze von Baumaschinen, insbesondere für eine Fräsmaschine zur Bearbeitung der Straßenoberfläche, umfassen üblicherweise einen Sitz mit einer entsprechenden Sitzfläche mit einer flächigen und im Wesentlichen horizontal liegenden Sitzfläche. Häufig ist ferner eine Rückenlehne vorhanden, um dem Bediener eine bequeme Sitzposition zu ermöglichen. Seitlich zur Sitzfläche ist eine Armlehne angeordnet, die eine Armauflagefläche aufweist. Die Relativposition der Armlehen bzw. der Armauflagefläche zur Sitz- und Rückenfläche ist derart gewählt, dass der im Sitz sitzende Bediener seinen Arm auf der Armauflagefläche der Armlehne angewinkelt ruhen lassen kann. Konkret ruht üblicherweise der Unterarm auf der Armauflagefläche. Selbstverständlich ist es auch möglich, auf jeder der beiden Seiten der Sitzfläche jeweils eine solche Armlehne vorzusehen. Es ist ferner üblich, Bedienelemente, insbesondere multifunktionale Bedienelemente, beispielsweise in Form einer Joystick-Steuerung, zur Steuerung mindestens einer Maschinenfunktion an der Armlehne anzuordnen. Diese spezielle Ausführungsform eines Bedienarbeitsplatzes ermöglicht es dem Maschinenführer auch über lange Zeit bequem und in ergonomisch günstiger Körperhaltung die Baumaschine zu führen, da er den Arm auf der Armauflagefläche auflegen kann und gleichzeitig mit dem in die Armlehne integrierten Bedienelement Bedienungsfunktionen an der Baumaschine durchführen kann. Ein gattungsgemäßer Bedienarbeitsplatz ist beispielsweise aus der DE 10 2006 015 504 A1 bekannt. Aus der US 2006/0061122 A1 ist ein verstellbarer Bedienarbeitsplatz eines Gabelstaplers bekannt.

Im alltäglichen Betrieb einer Baumaschine treten jedoch häufig Situationen auf, in denen eingeschränkte Sichtverhältnisse aus der Sitzposition des Maschinenführers heraus eine exakte Maschinenführung verhindern. Dies tritt beispielsweise besonders häufig bei Fräsmaschinen zur Bearbeitung der Straßenoberfläche auf, bei denen eine Fräswalze möglichst exakt über den abzufräsenden Straßenbelag geführt werden muss. Viele Maschinenführer wechseln insbesondere in solchen Situationen häufig von ihrer sitzenden Position (Sitzposition) in eine stehende Position (Stehposition), um insbesondere den zu bearbeitenden Arbeits- und/oder Randbereich besser in Augenschein nehmen zu können und eine präzisere Führung der Baumaschine über dem Untergrund zu erreichen. Aus der DE 10 2006 015 504 A1 ist es aus diesem Grunde bekannt, die Rückenlehne des Sitzes des Bedienarbeitsplatzes zum Fahrer hin schwenkbar auszuführen, so dass dieser das obere Ende der Rückenlehne als Sitzfläche in einer halbstehenden Sitzstehposition nutzen kann. Um dem Maschinenführer sowohl in seiner Sitzposition als auch in seiner anlehnenden Sitzstehposition eine sichere Führung der Baumaschine zu ermöglichen, kann das in Arbeitsrichtung der Baumaschine vor dem Maschinenführer positionierte Lenkrad um eine horizontale Schwenkachse zwischen einer Schrägstellung in eine flachere Position hoch geschwenkt werden und umgekehrt. Mit jedem Wechsel zwischen der Sitzposition in der Steh- bzw. Sitzstehposition muss der Bediener bei dieser Ausführungsform allerdings seine Armhaltung anpassen. Gleichzeitig ist insbesondere in der Stehposition die Bedienung des wenigstens einen Bedienelementes in der Armlehne sehr ermüdend und ergonomisch ungünstig, da keine Auflagemöglichkeit für den Bedienarm des Bedieners zur Verfügung steht. Insbesondere bei modernen Straßenfräsen werden jedoch immer mehr Funktionen als Bedienelemente in die seitlich neben dem Maschinenführer angeordnete Armlehne integriert und teilweise ist sogar gar kein Lenkrad mehr vorhanden und die Lenkbedienung erfolgt ebenfalls über armlehnenseitige Bedienelemente. Hier treten die Ermüdungserscheinungen in verschiedenen Positionen des Bedieners besonders deutlich hervor.

Die Armlehne ist üblicherweise fest am Sitz angeordnet und erlaubt, wenn überhaupt, lediglich eine minimale Höhenanpassung für verschiedene Bediener jeweils in der Sitzposition. Übliche Verstellwege liegen beispielsweise im Bereich bis maximal 10 cm in Vertikalrichtung. Wechselt der Maschinenführer jedoch von seiner Sitzposition in die Stehposition, ändert sich die Stellung seines Arms zu den in die Armlehne integrierten Bedienelemente. Dies wird häufig als nachteilig empfunden, da sich somit die Bedienelementfunktionen von der Sitzposition und der Stehposition nicht gleichartig bedienen lassen. Darüber hinaus ist die Bedienung der in die Armlehne integrierten Bedienelemente insbesondere in der Stehposition für den Maschinenführer besonders anstrengend, da dann der Arm gerade nicht mehr auf der Armlehne aufliegen kann und er mit einer äußerst unbequemen Schräghaltung des Armes, insbesondere Unterarmes, die Bedienelemente in der Armlehne bedienen muss.

Die Aufgabe der Erfindung ist es demnach, einen Bedienarbeitsplatz anzugeben, der hinsichtlich Bedienungskomfort und Funktionalität gegenüber den bisherigen Bedienarbeitsplätzen von Baumaschinen, insbesondere von Fräsen zur Bearbeitung einer Straßenoberfläche, verbessert ist.

Die Lösung der Aufgabe gelingt mit einem Bedienarbeitsplatz und einer Baumaschine gemäß den unabhängigen Ansprüchen. Bevorzugte Weiterbildungen sind in den abhängigen Ansprüchen angegeben.

Ein wesentlicher Aspekt der Erfindung liegt darin, dass der Bedienarbeitsplatz einer Verstelleinrichtung aufweist, die der Weise ausgebildet ist, dass die Armlehne zwischen einer Sitzbedienposition und einer gegenüber der Sitzbedienposition in Vertikalrichtung hochgestellten Stehbedienposition verstellbar ausgebildet ist. Erfindungsgemäß handelt es sich demnach nicht um eine Armlehne, die lediglich für den in der Sitzposition befindlichen Bediener eine geringfügig in der Höhe justierbare Armlehne aufweist. Der erfindungsgemäße Gedanke geht vielmehr dahin, dass die Armlehne zwischen zwei in Vertikalrichtung deutlich zueinander beabstandeten Positionen verstellt werden kann, um sowohl dem sitzenden als auch dem stehenden Bediener eine Auflagemöglichkeit für den Bediener zur Verfügung zu stellen. Der vorteilhafte Effekt einer solchen Verstelleinrichtung liegt im Wesentlichen darin, dass sich die Position des Armes relativ zur Armauflagefläche der Armlehne und damit auch zu dem wenigstens einem an der Armlehne angeordneten Bedienelement von der Sitzbedienposition in die Stehbedienposition und umgekehrt nicht ändert bzw. aufrechterhalten bleibt. Die Armlehne macht die Aufstehbewegung des Bedieners von der Sitzbedienposition in die Stehbedienposition bzw. in umgekehrter Richtung die Hinsetzbewegung von der Stehbedienposition in die Sitzbedienposition sozusagen mit. Dieser erfindungsgemäße Bedienarbeitsplatz zeichnet sich somit einerseits durch eine besonders hohe Variabilität aus, da der Bediener sowohl in einer in dem Sitz sitzenden Position ("Sitzbedienposition") als auch in einer im Bedienarbeitsplatz stehenden Position ("Stehbedienposition") arbeiten kann. Andererseits bietet der erfindungsgemäße Bedienarbeitsplatz dem Bediener ein besonders sicher und zuverlässig zu bedienendes Umfeld dar, da das mindestens eine an der Armlehne angeordnete Bedienelement sowohl in der Sitzbedienposition als auch in der Stehbedienposition der Armlehne aus der gleichen Positionierung des Armes herausbedient werden kann. Sowohl in der sitzenden Körperhaltung des Bedieners (Armlehne in Sitzbedienposition)als auch in der stehenden Körperhaltung des Bedieners (Stehbedienposition) kann er somit seinen Arm und insbesondere Unterarm in gleicher Weise auf der Armauflagefläche der Armlehne ablegen, da die erfindungsgemäße Armlehne mit Verstelleinrichtung die Hinsetz- und die Aufstehbewegung mitmacht. In Vertikalrichtung gesehen liegt der Stellbereich der Armlehne dazu insbesondere im Bereich zwischen 25 und 60 cm und ganz besonders 30 bis 50 cm. Die Sitzbedienposition bezeichnet vorliegend somit die Positionierung der einzelnen Elemente des Bedienarbeitsplatzes, insbesondere auch der Armlehne, die die Bedienung durch einen sitzenden Bediener betreffen. Die "Stehbedienposition" bezeichnet dagegen diejenige Stellung, die die einzelnen Komponenten des Bedienarbeitsplatzes bei einer Bedienung durch einen stehenden Bediener innehaben.

Um die Variabilität der Stehbedienposition gegenüber der Sitzbedienposition noch weiter zu erhöhen, ist es erfindungsgemäß vorgesehen, dass die Verstelleinrichtung in der Weise ausgebildet ist, dass die Armlehne in der Stehbedienposition gegenüber der Sitzbedienposition in Horizontalrichtung gegenüber der Sitzfläche nach vorn versetzt ist. Die Erfindung zeichnet sich somit dadurch aus, dass die Verstellbewegung der Armlehne zwischen ihren Positionen in Sitzbedienposition und in Stehbedienposition nicht nur eine Verstellkomponente in Vertikalrichtung, sondern eine weitere Verstellkomponente in Horizontalrichtung umfasst. Üblicherweise ist die sitzende Position gegenüber einer stehenden Position nach hinten (bzw. entgegen der Blickrichtung des Bedieners) verlagert. Erhebt sich der Bediener aus seinem Sitz, um beispielsweise den vor einer Fräswalze liegenden Arbeitsraum besser in Augenschein zu nehmen, bewegt er seinen Oberkörper aufwärts und nach vorn. Dies ist insbesondere dann der Fall, wenn der Sitz im Wesentlichen feststehend ausgebildet ist. Feststehend ist in diesem Zusammenhang so zu verstehen, dass der Sitz bzw. die Sitzfläche nicht weggeschwenkt werden kann, um beispielsweise Platz für die Stehbedienposition des Bedieners zu schaffen. Feststehend bedeutet dagegen nicht, dass der Sitz nicht individuell bezüglich Höhe und Tiefe des Sitzes in der Sitzposition um wenige Zentimeter verstellbar ist.

Für den Fall, dass die Verstelleinrichtung eine Verstellbewegung der Armlehne von der Stehbedienposition in die Sitzbedienposition und umgekehrt mit einer Horizontalkomponente und einer Vertikalkomponente durchführt, ist es grundsätzlich möglich, die Verstelleinrichtung so zu konstruieren, dass diese beiden Bewegungsabläufe nacheinander ablaufen. Für diese Ausführungsform ist die Verstelleinrichtung beispielsweise in der Weise ausgebildet, dass die Armlehne bei einer Bewegung von ihrer Sitzbedienposition hin zur Stehbedienposition zunächst in Horizontalrichtung nach vorne und anschließend in Vertikalrichtung nach oben bewegt wird. In einer alternativen Ausführungsform laufen die Vertikal- und die Horizontalverstellung allerdings gleichzeitig ab. Bei dieser Ausführungsform ist die Verstelleinrichtung somit in der Weise ausgebildet, dass die Verstellbewegung zwischen der Sitzbedienposition und der Stehbedienposition bezüglich Vertikal- und Horizontalrichtung überlappend, insbesondere gleichzeitig, erfolgt. Insgesamt resultiert somit beispielsweise eine in der in Blickrichtung des Bedieners bzw. bezogen auf die Baumaschine nach vorn gerichteten Vertikalebene eine Schrägbewegung der Armlehne, die in dieser vertikalen Ebene geradlinig oder auch gekurvt, insbesondere vom Bediener ausgesehen konkav gekrümmt, ausgebildet sein kann. Der Vorteil der Ausbildung der Verstelleinrichtung in der Weise, dass die horizontale und die vertikale Schwenkbewegung der Armlehne in einem gemeinsamen Bewegungsablauf kombiniert werden und damit gleichzeitig ablaufen, liegt unter anderem darin, dass dadurch ein harmonischer bzw. gleichförmiger Bewegungsablauf der Armlehne zwischen der Sitzbedienposition und der Stehbedienposition und umgekehrt erhalten wird, der vom Bediener als besonders angenehm empfunden wird.

Selbstverständlich ist es möglich, noch weitere Verstellmöglichkeiten in die Verstelleinrichtung mit zu integrieren. Dies betrifft insbesondere auch eine Ausbildung der Verstelleinrichtung in der Weise, dass die Armlehne seitlich verstellbar ist. "Seitlich" bezieht sich dabei auf eine Verstellbewegung zur Seite des im Sitz sitzenden Bedieners, also nach rechts oder links. Diese Ausführungsform ermöglicht es insbesondere auch, dass der Bediener bei einer Bewegung von der Sitzbedienposition in die Stehbedienposition zusätzlich seitlich zur Sitzfläche austritt. Dies ist insbesondere bei solchen Baumaschinen relevant, bei denen die exakte Führung wenigstens einer der beiden Seiten der Straßenbaumaschine, wie es insbesondere auf der Nullseite einer Straßenfräse der Fall ist, besonders wichtig ist. Insgesamt erhöht die zusätzliche seitliche Verstellbarkeit der Armlehne zwischen Sitzbedienposition und Stehbedienposition die Einsatzvariabilität des erfindungsgemäßen Bedienarbeitsplatzes.

Die Sitzfläche des Bedienarbeitsplatzes kann vollständig vom Bewegungsablauf der Verstelleinrichtung entkoppelt sein. Wird die Armlehne bei dieser Ausführungsform mittels der Verstelleinrichtung von der Sitzbedienposition in die Stehbedienposition und umgekehrt bewegt, hat dies beispielsweise keinerlei Auswirkungen auf die Positionierung der Sitzfläche. Diese Ausführungsform weist insbesondere die vorstehend genannte Verstelleinrichtung mit vertikaler und horizontaler Verstellkomponente auf, um durch die Vertikalkomponente das nach vorne gerichtete "Aussteigen" des Bedieners aus dem Sitz in die Stehbedienposition mit der Armlehne auszugleichen.

Alternativ ist es jedoch auch möglich, die Sitzfläche um eine Horizontalachse hoch- und runter klappbar auszubilden und die Verstelleinrichtung funktional an diese Klappfunktion der Sitzfläche anzukoppeln. Dabei kann die Sitzfläche nach hinten wegklappen. Es sind allerdings auch Ausführungsformen denkbar, bei denen die Sitzfläche zur Armlehne hin oder zu der der Armlehne gegenüberliegenden Seite verschwenkt. Wesentliches Merkmal dieser Ankopplung ist es, dass durch die Stellung des klappbaren Sitzes gleichzeitig die Position der Armlehne gesteuert wird. Die Sitzfläche ist bei dieser Ausführungsform bevorzugt federkraftbeaufschlagt in der Weise, dass sie in die hochgeklappte Position geschwenkt wird, wenn kein Bediener auf der Sitzfläche sitzt und diese mit seinem Gewicht in die heruntergeklappte Position drückt. Eine derartige Federbeaufschlagung ermöglicht es beispielsweise, dass ein Aufstehen des Bedieners (wodurch die Sitzfläche durch die Federkraftbeaufschlagung hoch schwenkt) automatisch eine Verschwenkung der Armlehne von der Sitzbedienposition in die Stehbedienposition auslöst. Diese Ausführungsform mit Ankopplung der Armlehnenstellung an die Klappposition der Sitzfläche ist insbesondere dann vorteilhaft, wenn die Verstelleinrichtung in der Weise ausgebildet ist, dass die Armlehne lediglich in Vertikalrichtung, gegebenenfalls kombiniert mit einer seitlichen Verstellbewegung, verstellbar ist. Das Hochklappen der Sitzfläche zusammen mit dem Hoch- (und gegebenenfalls zur Seite verstellen der Armlehne führt dazu, dass der Raum unterhalb der Sitzfläche in der Stehbedienposition der Armlehne vom Bediener als Standfläche genutzt werden kann. Diese Ausführungsform zeichnet sich insbesondere durch ihren besonders geringen räumlichen Platzbedarf aus.

Die konkrete Ausbildung der Verstelleinrichtung kann in mannigfaltiger Weise variiert werden. So können beispielsweise hydraulische, pneumatische und/oder elektromotorische Einrichtungen vorgesehen sein, um die Verstellbewegung der Armlehne von der Sitzbedienposition in die Stehbedienposition und umgekehrt zu steuern. Dazu können beispielsweise entsprechend geeignete Führungsschienen, teleskopierbare Elemente, etc. verwendet werden. Bevorzugt ist es, wenn die Verstelleinrichtung ein Schwenkgetriebe aufweist, das zur Durchführung einer in einer vertikalen Ebene liegenden Schwenkbewegung der Armlehne ausgebildet ist. Schwenkgetriebe sind vergleichsweise preisgünstig zu realisieren und weisen eine hohe Funktionszuverlässigkeit auf. Ein wesentliches Merkmal des erfindungsgemäßen Schwenkgetriebes liegt darin, dass es zur Durchführung einer in einer vertikalen Ebene liegenden Schwenkbewegung der Armlehne ausgebildet ist. Diese Vertikalebene verläuft dabei bevorzugt in Blickrichtung des Bedieners bzw. in Arbeitsrichtung der Baumaschine. Umfasst sind somit sowohl Verstellbewegungen, die lediglich in Vertikalrichtung orientiert sind, als auch solche Verstellbewegungen, die neben einer Vertikalkomponente noch eine Horizontalkomponente umfassen. Bevorzugt sind ferner solche Schwenkgetriebe, deren Schwenkglieder sich über die Schwenkbewegung hinweg in zueinander parallelen und zum Teil identischen Schwenkebenen bewegen.

Erfindungsgemäß kommen eine Vielzahl verschiedener Schwenkgetriebe zur Verwirklichung der Verstelleinrichtung in Betracht. Aus platztechnischen Gründen hat sich beispielsweise die Verwendung eines ebenen Getriebes als besonders günstig erwiesen.

Ein konkreter Getriebetyp, der zum Erhalt des erfindungsgemäßen Schwenkgetriebes besonders bevorzugt ist, ist das Viergelenkgetriebe. Dieses zeichnet sich üblicherweise durch das Vorhandensein von vier, beispielsweise in Form eines Vierecks zueinander angeordneten, Getriebegliedern aus, wobei benachbarte Getriebeglieder jeweils über eine Gelenkverbindung miteinander verbunden sind. Ideal ist es, wenn alle Schwenkachsen der jeweils miteinander verbundenen Getriebeglieder parallel zueinander liegen.

Das Viergelenkgetriebe ist bevorzugt als Lenkergetriebe, insbesondere als Parallellenkergetriebe ausgebildet. Lenkergetriebe eignen sich insbesondere zur Parallelführung einzelner Glieder. Besonders ökonomisch ist es, wenn ein Getriebeglied des Schwenkgetriebes von einem Tragelement der Armlehne gebildet ist. Mit einer derartigen Ausführungsform ist es beispielsweise besonders gut möglich, die Aufrechterhaltung der Horizontalpositionierung der Armlehne bzw. der Armauflagefläche, die zur Gewährleistung einer ergonomisch günstigen Stellung der Armlehne/Armauflagefläche bevorzugt ist, auf besonders effiziente Weise über die gesamte Schwenkbewegung hinweg aufrecht zu erhalten. Darüber hinaus kann der Aufbau der Verstelleinrichtung bzw. des Schwenkgetriebes der Verstelleinrichtung vereinfacht werden, da die Armlehne gleichzeitig die Doppelfunktion "Getriebeglied" und "Armauflage" erfüllt.

Alternativ oder ergänzend ist es auch möglich, dass ein Getriebeglied vom Sitzrahmen bzw. einem fest mit dem Sitzrahmen oder der Sitzfläche verbundenen Teil bzw. einem relativ zum Boden des Bedienarbeitsplatzes ortsfesten Teil gebildet wird. Dieser Bereich erfüllt dann die Doppelfunktion "Getriebeglied" und "Getriebegestell".

Üblicherweise ist das Ausmaß der Verstellbewegung der Armlehne zwischen ihrer Sitzbedienposition und ihrer Stehbedienposition über die Verstelleinrichtung begrenzt, beispielsweise durch entsprechende Anschläge etc. Grundsätzlich sind erfindungsgemäß somit zunächst erst einmal solche Ausführungsformen vorgesehen, die eine alleinige Verstellung der Armlehne zwischen ihren beiden Endpositionen Sitzbedienposition und Stehbedienposition erlaubt. Zwischenpositionen zwischen den beiden äußeren schwenkbegrenzten Anschlagstellungen sind bei diesen Ausführungsformen somit nicht möglich. Bevorzugt ist es jedoch, eine Arretiervorrichtung in der Verstelleinrichtung in der Weise vorzusehen, dass die Armlehne in der Sitzposition und/oder in der Stehposition festgestellt werden kann. Diese Ausführungsform hat den Vorteil, dass die Armlehne auch in Zwischenpositionen zwischen ihrer maximal in die Sitzbedienposition eingeschränkten und maximal in ihrer Stehbedienposition ausgeschwenkten Position, beispielsweise in einer Sitzstehbedienposition, arretierbar ist. Damit können beispielsweise Größenunterschiede der individuellen Bediener besonders gut berücksichtigt werden. Zur konkreten Arretierung kann die Verstelleinrichtung beispielsweise entsprechend geeignete Rastmittel und/oder Klemmmittel etc. aufweisen.

Um den für eine Verstellung der Armlehne erforderlichen Kraftaufwand zu reduzieren, umfasst die Verstelleinrichtung bevorzugt eine Antriebsvorrichtung. Diese ist in der Weise ausgelegt, dass sie eine Antriebskraft zur Verfügung stellt, die, je nach konkreter Ausführungsvariante, eine Verstellung der Armlehne von der Sitzbedienposition in die Stehbedienposition und/oder umgekehrt antreibt bzw. zumindest unterstützt. Dazu kann die Verstelleinrichtung beispielsweise als Antriebsvorrichtung eine entsprechende Zylinderkolbeneinheit oder elektromotorische Einheit umfassen. Besonders günstig ist die Verwendung einer Gasdruckfeder, die sich durch ihre vom Federweg nahezu unabhängige Kraft, ihren geringen Platzbedarf und ihren herausragenden Dämpfungseigenschaften auszeichnet. Auch die vorstehend bereits erwähnte Federkraftbeaufschlagung der Sitzfläche kann bei entsprechender Ankopplung der Armlehne an die Sitzfläche als Antriebsvorrichtung genutzt werden.

Besonders ökonomisch ist es, wenn die Antriebsvorrichtung in der Weise ausgebildet ist, dass sie neben dem (zumindest teilweisen) Antrieb der Verstellbewegung der Armlehnen von ihrer Sitzbedienposition in ihre Stehbedienposition und/oder umgekehrt gleichzeitig zur Arretierung der Armlehne in der Stehposition und/oder in der Sitzposition ausgebildet ist. Eine derartige Antriebsvorrichtung erfüllt somit eine Doppelfunktion und vereint Antriebseigenschaften und Feststell- bzw. Arretiereigenschaften.

Die Antriebsvorrichtung ist idealerweise ferner in der Weise in den Bedienarbeitsplatz integriert, dass sie am Schwenkgetriebe unmittelbar angelenkt ist. Damit entfallen entsprechende Übertragungselemente zur Übertragung und Weiterleitung der Antriebskraft, was den Aufbau des erfindungsgemäßen Bedienarbeitsplatzes vereinfacht.

Gemäß den vorstehenden Ausführungen liegt das Grundkonzept der Erfindung darin, die Armlehne zwischen einer Sitzbedienposition und einer Stehbedienposition hin und her bewegen zu können. Um eine ideale Feinanpassung, insbesondere der Armlehne bzw. der Stellung der Verstelleinrichtung in der Sitzbedienposition und der Stehbedienposition zu erreichen, ist der Bedienarbeitsplatz bzw. die Verstelleinrichtung bevorzugt in der Weise ausgebildet, dass die exakte Positionierung der Sitzbedienposition und der Stehbedienposition justierbar ist. justierbar bedeutet vorliegend, dass die Positionierung der Armlehne durch entsprechend geeignete Verstelleinrichtungen, wie beispielsweise entsprechende Stellmotoren, Stellschrauben, etc., in einen um die jeweilige Endposition der Verstellbewegung der Armlehnen pendelnden Justier- bzw. Feinbereich vom Bediener verstellt werden kann. Diese Einstellungen beziehen sich jedoch auf unterschiedliche Stellungen der Armlehne jeweils in der Sitzbedienposition und der Stehbedienposition. Bezüglich der Verstellbarkeit der Armlehne in Vertikalrichtung ist dieser Justierbereich beispielsweise in der Weise ausgelegt, dass er bevorzugt 3 bis 10 % des maximalen vertikalen Verstellweges der Armlehne von der Sitzbedienposition in die Stehbedienposition umfasst. Dabei handelt es sich üblicherweise um wenige Zentimeter, beispielsweise im Bereich von 4 bis 10 cm.

Weitere Variationsmöglichkeiten hinsichtlich des erfindungsgemäßen Bedienarbeitsplatzes ergeben sich in Hinblick auf die Art und Weise der Steuerung der Verstellung der Armlehne bzw. der Verstelleinrichtung zwischen ihrer Sitzbedienposition und ihrer Stehbedienposition und umgekehrt. Grundsätzlich ist es möglich, die Verstelleinrichtung der Armlehne quasi schwimmend zu konstruieren, so dass die Verstellung durch bloßes Drücken oder Ziehen der Armlehne zwischen ihren beiden Endpositionen ausgelöst wird. Hinsichtlich des Bedienungskomforts und einer erhöhten Bedienungssicherheit ist es jedoch von Vorteil, die Armlehne in ihrer jeweiligen Position gegen weitere Verstellungen zu sichern. Um nun eine Verstellung der Armlehne von ihrer Sitzbedienposition in die Stehbedienposition oder umgekehrt auszulösen, weist bei dieser Ausführungsform der Bedienarbeitsplatz ein Auslöseelement, beispielsweise in Form eines Auslösehebels oder eines Auslösetasters, auf, dessen Betätigung die Verstellung zwischen der Sitzbedienposition und der Stehbedienposition und umgekehrt auslöst. Das Auslöseelement ist darüber hinaus bevorzugt in einer gut erreichbaren Position, beispielsweise im in Blickrichtung des Bedieners weisenden Sichtbereich der Armlehne, angeordnet, um auf diese Weise eine gute Erreichbarkeit sowohl in der Sitzbedienposition als auch in der Stehbedienposition zu gewährleisten.

In fertigungstechnischer Hinsicht ist es ferner von Vorteil, den Bedienarbeitsplatz inklusive Sitz, der Verstelleinheit und der Armlehne als baulich zusammenhängende Einheit auszulegen. Der Bedienarbeitsplatz kann dann neben der übrigen Maschine nahezu vollständig vorgefertigt werden und als zusammenhängendes Modul in die übrige Maschine eingefügt werden. Dabei hatte sich gezeigt, dass es insbesondere im Bereich von Straßenfräsen vorteilhaft ist, den Bedienarbeitsplatz in schwingungsisolierter Form gegenüber einem Maschinenraum der Straßenfräse auszulegen, um die üblicherweise heftig auftretenden Vibrationen des Maschinenrahmens gegenüber dem Bedienarbeitsplatz zu entkoppeln. Zusätzlich oder alternativ kann der Bedienarbeitsplatz in seiner Gesamtheit um eine Vertikalachse schwenkbar ausgelegt sein, um dem Bediener verschiedene Positioniermöglichkeiten nach rechts und nach links zu ermöglichen.

Es ist darüber hinaus möglich, auf beiden Seiten des Sitzes jeweils eine Armlehne in der vorstehend beschriebenen Ausführungsweise in einem erfindungsgemäßen Bedienarbeitsplatz vorzusehen. Damit kann der Bediener beide Arme auf einer erfindungsgemäßen Armlehne in der sitzenden und in der stehenden Stellung auflegen. Gleichzeitig oder alternativ kann beispielsweise auch eine neigungs- und höhenverstellbare Lenksäule vorhanden sein, die idealerweise zusammen mit der Armlehne ihre Position von einer auf die Sitzbedienposition abgestimmten Positionierung und einer auf die Stehbedienposition abgestimmten Positionierung ändert.

Ein weiterer Aspekt der Erfindung liegt in einer Baumaschine, insbesondere Fräsmaschine zur Bearbeitung der Straßenoberfläche, mit einem erfindungsgemäßen Bedienarbeitsplatz.

Idealerweise ist der Bedienarbeitsplatz gegenüber dem Maschinenrahmen der Baumaschine schwingungsgedämpft ausgebildet, um die auf den Bediener übertragene Vibrationsbelastung zu minimieren. Bei dieser Ausführungsform umfasst der Bedienarbeitsplatz weiter bevorzugt einen Fahrerstandboden, der ebenfalls schwingungsgedämpft und, je nach Ausführungsform, zusammen mit dem Sitz um eine Vertikalachse schwenkbar ausgebildet ist. Die Sitzschwenkbewegung erfolgt dabei selbstverständlich zusammen mit der Armlehne, um die Relativpositionierung zwischen dem Bediener und der Armlehne konstant zu halten.

Nachstehend wird die Erfindung anhand einer beispielhaften Ausführungsform näher erläutert. Es zeigen schematisch:
- Fig. 1:: Eine Draufsicht auf eine Fräse mit einem Bedienarbeitsplatz;
- Fig. 2:: Seitenansicht auf einen Bedienarbeitsplatz mit in Sitzbedienposition befindlicher Armlehne;
- Fig. 3:: Seitenansicht auf den Bedienarbeitsplatz aus Fig. 2 mit der Armlehne in Stehbedienposition;
- Fig. 4:: Seitenansicht auf den Bedienarbeitsplatz aus Fig. 2 mit abgenommenem Aufbau;
- Fig. 5:: Ansicht auf den Bedienarbeitsplatz aus Fig. 3 mit abgenommenem Aufbau;
- Fig. 6:: Getriebeskizze des Schwenkgetriebes gemäß den Figuren 2 und 4; und
- Fig. 7:: Getriebeskizze des Schwenkgetriebes in der Stellung gemäß den Figuren 3 und 5.

Gleiche Bauteile sind in den Figuren mit gleichen Bezugszeichen angegeben.

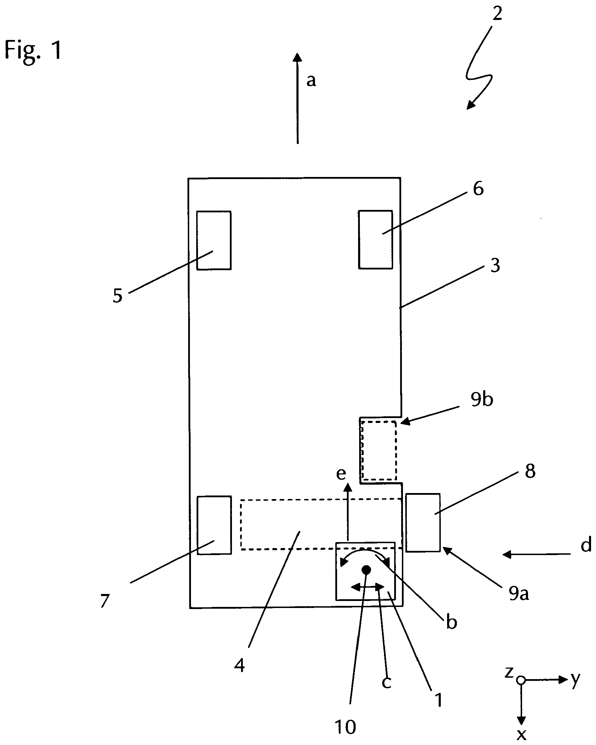

Aus Fig. 1 ergibt sich zunächst die typische Positionierung eines Bedienarbeitsplatzes 1 einer Fräse 2 zur Bearbeitung der Straßenoberfläche im Verhältnis zum Maschinenrahmen 3 und einer Arbeitseinrichtung 4. Der in Fig. 1 lediglich stark schematisiert angegebene Bedienarbeitsplatz 1 ist im hinteren Teil der Fräse 2 angeordnet und liegt, bezogen auf die Arbeitsrichtung a, über der Arbeitseinrichtung 4. Die Fräse 2 weist ferner zwei vordere Stützräder 5 und 6 und zwei hintere Stützräder 7 und 8 auf, die jeweils über einen entsprechenden Hydraulikmotor angetrieben sind und den Maschinenrahmen 3 tragen. Alternativ sind auch Ausführungsformen möglich, bei denen nur ein vorderes Stützrad vorhanden ist. Die konkret als zylinderförmige Frästrommel ausgebildete Arbeitseinrichtung 4) schließt auf der einen Seite (in Fig. 1 auf der rechten Seite) nahezu bündig mit dem Maschinenrahmen 3 ab. Diese Seite der Fräse 2 wird auch als Nullseite bezeichnet. Die Arbeitseinrichtung 4 dient beispielsweise zum Abtragen von Straßendecken aus Beton, Asphalt oder der gleichen, und wird dazu auf die zu bearbeitende Oberfläche abgesenkt, in Rotation versetzt und in Pfeilrichtung a über die Straßendecke hinwegbewegt. Pfeilrichtung a gibt somit in Fig. 1 die "Vorwärtsrichtung" bzw. "Arbeitsrichtung" der Fräse 2 an. Dabei entspricht die Arbeitsrichtung der Blickrichtung e des Bedieners der Fräse 2 im Bedienarbeitsplatz 1. Das auf der Nullseite befindliche hintere Stützrad 8 ist ferner schwenkbar ausgebildet und kann von einer über dem Maschinenrahmen vorstehenden Ausschwenkposition 9a in die nahezu bündig mit dem Maschinenrahmen abschließende Einschwenkposition 9b eingeschwenkt werden. Das hintere Stützrad 8 ist dazu über ein geeignetes Horizontalschwenkgetriebe (in Fig. 1 nicht dargestellt) am Maschinenrahmen 3 angelenkt.

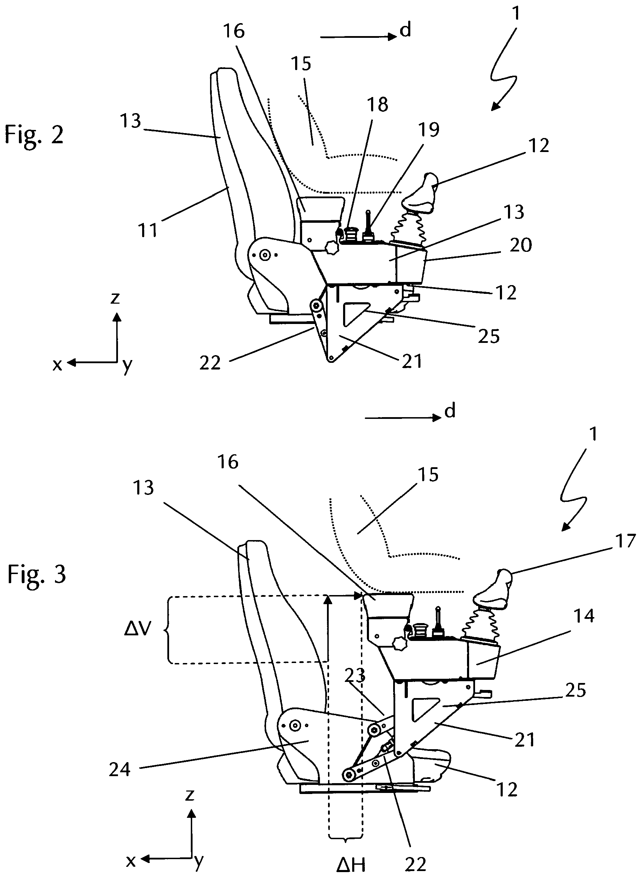

Bei der vorliegenden Ausführungsform des Bedienarbeitsplatzes 1 sind ferner nicht weiter gezeigte Mittel vorhanden, die einerseits eine horizontale Schwenkbarkeit gemäß dem Doppelpfeil b um eine Vertikalachse 10 sowie eine vertikale Rechts- Links-Verschiebbarkeit gemäß dem Pfeil c des Bedienarbeitsplatzes 1 ermöglichen. Beim Ausführungsbeispiel des Bedienarbeitsplatzes 1 in Fig. 1 ist dieser ferner schwingungsgedämpft gegenüber dem Maschinenrahmen 3 gelagert, so dass die insbesondere bei Fräsarbeiten am Maschinenrahmen 3 auftretenden Vibrationen gedämpft auf den Bedienarbeitsplatz 1 übertragen werden. Weitere Details hinsichtlich des Aufbaus und der Funktionsweise des Bedienarbeitsplatzes 1 sind in den Figuren 2 bis 7 angegeben, wobei die Figuren den Bedienarbeitsplatz 1 jeweils aus der Blickrichtung d in Fig. 1 wiedergeben.

Grundsätzliche Elemente des Bedienarbeitsplatzes 1 sind ein Sitz 11 mit einer Sitzfläche 12 und einer Rückenlehne 13. Seitlich zur Sitzfläche 12 weist der Sitz 11 ferner eine Armlehne 14 auf. Die Armlehne 14 ist zum Aufstützen des Armes, insbesondere des Unterarmes, des Maschinenführers bzw. Bedieners vorgesehen, wie es durch den phantomartig angedeuteten Arm 15 in den Figuren 2 und 3 angezeigt ist. Die Armlehne 14 weist dazu eine Armauflagefläche 16 auf, die im gezeigten Ausführungsbeispiel insbesondere zur Aufnahme des Ellenbogenbereichs des Armes vorgesehen ist. Die Armauflagefläche 16 dient somit der Entlastung des Maschinenführers. Die Armlehne 14 weist ferner ein Joystick-Bedienelement 17 und weitere manuelle Bedienelemente 18 und 19 auf. Über eine Betätigung der Bedienelemente 17, 18 und 19 können entsprechende Maschinenfunktionen, wie beispielsweise Vorwärts- und Rückwärtsfahrt, Fräsbetrieb ein/aus, Anheben von Seitenschilden, etc., gesteuert werden. Insgesamt bilden die Bedienelemente 17, 18 und 19 zusammen mit der Armauflagefläche 16 eine Bedienkonsole, die nachfolgend auch als oberer Funktionsteil 20 der Armlehne 14 bezeichnet wird.

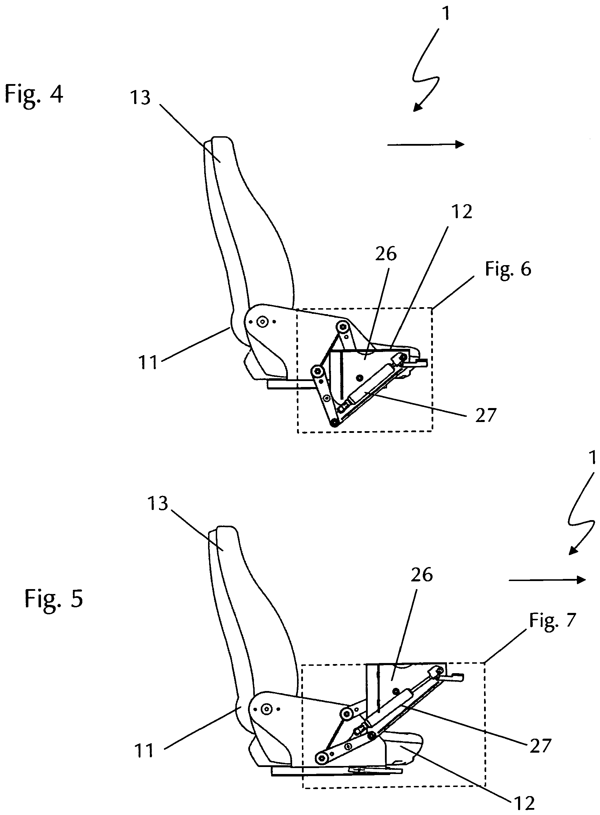

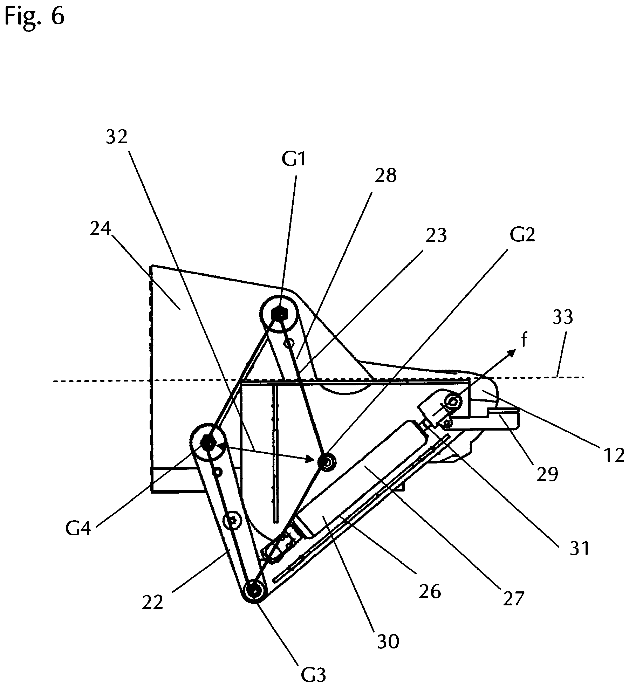

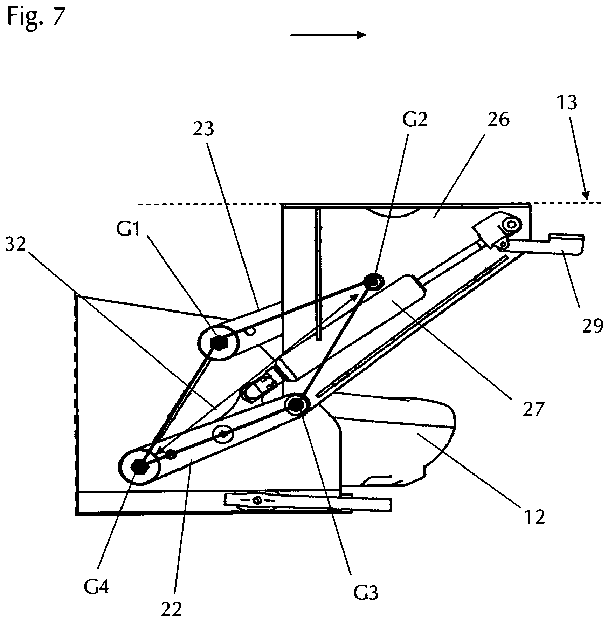

Die Armlehne 14 ist im Wesentlichen zweikomponentig aufgebaut und weist einen oberen Funktionsteil 20 und einen unteren Montageteil 21 auf. Im oberen Funktionsteil 20 sind unter anderem die Armauflagefläche 16 und die Bedienelemente 17 bis 19 angeordnet. Der untere Montageteil 21 dient im Wesentlichen einerseits der Halterung des oberen Funktionsteils 20 und andererseits der Verbindung zum Sitz 11. Konkret erfolgt die Verbindung zum Sitz 11 über zwei Schwenkhebel 22 und 23, die an ihrem einen Ende jeweils am unteren Montageteil 21 der Armlehne 14 und an ihrem anderen Ende jeweils an einem Rahmenelement 24 des Sitzes 11 angelenkt sind. Das Rahmenelement 24, die beiden Schwenkhebel 22 und 23 sowie der plattenartige untere Montageteil 21 der Armlehne 14 sind zusammen Bestandteil einer Verstelleinrichtung, die eine Verstellung der Armlehne 14 zwischen den beiden beispielsweise in den Figuren 2 und 3 gezeigten Stellungen ermöglicht. Fig. 2 (wie im Übrigen auch die Figuren 4 und 6) gibt die "Sitzbedienposition" wieder, in der die Armlehne 14 zum Sitz 11 hin positioniert ist, so dass der Bediener aus einer sitzenden Position seinen rechten Arm bzw. Ellenbogen auf die Armauflagefläche 16 auflegen kann und die Bedienelemente 17, 18 und 19 bequem mit der rechten Hand bedienen kann. Figur 3 (und die Figuren 5 und 7) geben dagegen die "Stehbedienposition" der Armlehne 14 wieder, in der die Armlehne 14 gegenüber dem Sitz 11 in Vertikalrichtung (z-Richtung) hochgestellt und in Horizontalrichtung (x-Richtung) nach vorn versetzt ist. Dies ist in Fig. 3 durch die Differenzangaben ΔV (entspricht der vertikalen Verstellung der Armlehne 14 in der Stehbedienposition gegenüber der Sitzbedienposition aus Fig. 2) und ΔH (entspricht dem Versatz der Armlehne 14 in Horizontalrichtung im Vergleich zur Sitzbedienposition in Fig. 2) weiter veranschaulicht. Beim in den Figuren 2 bis 7 gezeigten Ausführungsbeispiel des Bedienarbeitsplatzes 1 ist die Verstelleinrichtung somit in der Weise ausgebildet, dass die Armlehne 14 zwischen der Sitzbedienposition und der in Horizontalrichtung nach vorne und in Vertikalrichtung nach oben verschwenkten Stehbedienposition verstellbar ist.

Die grundsätzliche Funktionsweise der Verstelleinrichtung aus den Figuren 2 und 3 ist in den Figuren 4 bis 7 weiter verdeutlicht. Gegenüber den Figuren 2 und 3 wurde der obere Funktionsteil 20 der Armlehne 14 in den Figuren 4 und 5 abmontiert, so dass von der Armlehne 14 selbst lediglich der untere Montageteil 21 sichtbar ist. Fig. 4 entspricht dabei der Sitzbedienposition aus Fig. 2 und Fig. 5 der Stehbedienposition aus Fig. 3. Vom unteren Montageteil 21 wurde ferner die Vorderplatte 25 entfernt, so dass der Blick auf die Hinterplatte 26 freigegeben ist. Die Vorderplatte 25 und die Hinterplatte 26 sind im installierten Zustand parallel zueinander angeordnet und schließen einen Hohlraum zwischen sich ein, in dem eine Gasdruckfeder 27 angeordnet ist. Die Funktion der Gasdruckfeder 27 wird nachstehend noch weiter erläutert werden.

Die in den Figuren 4 und 5 gestrichelt eingerahmten Bereiche sind schließlich in den Figuren 6 und 7 vergrößert dargestellt. Fig. 6 ist somit eine Ausschnittsvergrößerung der Figur 5 und zeigt ebenfalls die Sitzbedienposition, wohingegen Fig. 7 eine Ausschnittsvergrößerung aus Fig. 5 ist und die Stehbedienposition der Armlehne 14 (allerdings ohne oberen Funktionsteil 20 und ohne Vorderplatte 25) widerspiegelt.

Die Figuren 6 und 7 verdeutlichen, dass die Verstelleinrichtung als wesentlichen Bestandteil ein Schwenkgetriebe in Form eines Viergelenkgetriebes umfasst, dessen vier Gelenkpunkte in den Figuren 6 und 7 mit G1, G2, G3 und G4 bezeichnet sind. Das Gestell des Viergelenkgetriebes wird von dem Rahmenelement 24 des Sitzes gebildet, an dem parallel zueinander verlaufend die beiden Schwenkhebel 22 und 23 über die Gelenkverbindungen G1 und G4 in einer Vertikalebene (konkret in der zx-Ebene) schwenkbar angeordnet sind. An ihren gegenüberliegenden Bereichen sind die beiden Schwenkhebel 22 und 23 dagegen am unteren Montageteil 21 (insbesondere an der Hinterplatte (26)) über die Gelenke G2 und G3 in der vertikalen xz-Ebene verbunden. Insgesamt ergibt sich somit ein Gelenkparallelogramm 28, welches in den Figuren 6 und 7 schematisiert zur Verdeutlichung angegeben ist. Die beiden Schwenkhebel 22 und 23 fungieren ferner als Lenker des durch das Viergelenkgetriebe erhaltenen Lenkergetriebes. Damit wird im Ergebnis erriecht, dass die horizontale Ausrichtung der oberen Auflagefläche im unteren Montageteil 21, auf den letztlich der obere Funktionsteil 20 mit der Armauflagefläche 16 anmontiert wird, über den gesamten Schwenkvorgang zwischen der Sitzbedienposition und der Stehbedienposition horizontal ausgerichtet bleibt und in beiden Endpositionen auch horizontal ausgerichtet ist.

Ferner ist ein Auslösehebel 29 vorhanden, der zur Steuerung der Gasdruckfeder 27 dient. Die Gasdruckfeder ist zwischen dem Schwenkhebel 22 und der benachbart dazu angeordneten Hinterplatte 26 angebracht und dient zur Feststellung und Verstellung der Armlehne 14 von der Sitzbedienposition in die Stehbedienposition und umgekehrt. Wesentliche Elemente der Gasdruckfeder sind ein Zylinder 30 und ein längsverschieblich im Zylinder gelagerter Kolben 31, der entlang der Zylinderachse verstellbar ist. Wird die Gasdruckfeder 27 in ihrer komprimierten in Fig. 6 angegebenen Stellung über den Auslösehebel 29 betätigt, entwickelt sie eine Stellkraft in Pfeilrichtung f. Dadurch werden die beiden Glieder Schwenkhebel 22 und Hinterplatte 26 bzw. die Gelenkpunkte G4 und G2 auseinander gedrückt, wie es durch den Doppelpfeil 32 angedeutet ist. Durch die Festlegung des Getriebegliedes zwischen den Gelenkpunkten G1 und G4 als Gestell, wird die von der Gasdruckfeder eingeleitete Kraft in einer schräg nach vorn bzw. in Blickrichtung d bzw. in der xz-Ebene liegenden Schwenkbewegung des Viergelenkgetriebes umgesetzt.

Zur Rückstellung der Armlehne 14 von ihrer Stehbedienposition in die Sitzbedienposition ist eine weitere Betätigung des Auslösehebels 29 erforderlich, wodurch die Feststellung der Gasdruckfeder 27 gelöst wird und diese, beispielsweise durch manuelles Kraftaufbringen, wieder in den komprimierten Zustand gemäß Fig. 6 gebracht werden kann und die Armlehne 14 damit wieder in ihre Sitzbedienposition einschränkt.

Eine weitere Funktion der Gasdruckfeder liegt darin, dass sie die Positionierung des Viergelenkgetriebes bei unbetätigtem Auslösehebel 29 arretiert und dadurch beispielsweise eine ungewollte Verstellung des Viergelenkgetriebes verhindert. Ein besonderer Vorzug der Gasdruckfeder liegt somit darin, dass mit ihr gleichzeitig eine Antriebsfunktion und eine Arretierfunktion erreicht werden kann.

## Patentansprüche

1. Bedienarbeitsplatz (1) für eine Baumaschine, insbesondere eine Fräsmaschine (2) zur Bearbeitung der Straßenoberfläche, mit einem Sitz (11), umfassend eine Sitzfläche (12), mit einer seitlich zur Sitzfläche (12) angeordneten Armlehne (14) mit einer Armauflagefläche (16) und mit wenigstens einem an der Armlehne (14) angeordneten Bedienelement (17, 18, 19) zur Steuerung wenigstens einer Maschinenfunktion,
wobei eine Verstelleinrichtung vorhanden ist, die in der Weise ausgebildet ist, dass die Armlehne (14) zwischen einer Sitzbedienposition und einer gegenüber der Sitzbedienposition in Vertikalrichtung hochgestellten Stehbedienposition verstellbar ausgebildet ist, **dadurch gekennzeichnet, dass** die Armlehne (14) in der Stehbedienposition gegenüber der Sitzbedienposition in Horizontalrichtung gegenüber der Sitzfläche (12) nach vorn versetzt ist.

2. Bedienarbeitsplatz (1) nach Anspruch 1,
**dadurch gekennzeichnet,**
**dass** die Verstelleinrichtung in der Weise ausgebildet ist, dass die Verstellbewegung der Armlehne (14) zwischen der Sitzbedienposition und der Stehbedienposition bezüglich Höhe und in Horizontalrichtung gleichzeitig erfolgt.

3. Bedienarbeitsplatz (1) nach einem der vorhergehenden Ansprüche,
**dadurch gekennzeichnet,**
**dass** die Verstelleinrichtung in der Weise ausgebildet ist, dass die Armlehne (14) seitlich verstellbar ist.

4. Bedienarbeitsplatz (1) nach einem der vorhergehenden Ansprüche,
**dadurch gekennzeichnet,**
**dass** die Sitzfläche (12) um eine Horizontalachse hochklappbar ausgebildet ist, und dass die Verstelleinrichtung funktional an die Klappfunktion der Sitzfläche (12) in der Weise gekoppelt ist, dass die Armlehne (14) mit dem Herunterklappen der Sitzfläche (12) von der Stehbedienposition in die Sitzbedienposition schwenkt und umgekehrt.

5. Bedienarbeitsplatz (1) nach einem der vorhergehenden Ansprüche,
**dadurch gekennzeichnet,**
**dass** die Verstelleinrichtung ein Schwenkgetriebe umfasst, das zur Durchführung einer in einer vertikalen Ebene liegenden Schwenkbewegung der Armlehne (14) ausgebildet ist.

6. Bedienarbeitsplatz (1) nach Anspruch 5,
**dadurch gekennzeichnet,**
**dass** das Schwenkgetriebe ein Viergelenkgetriebe ist.

7. Bedienarbeitsplatz (1) nach einem der Ansprüche 5 oder 6,
**dadurch gekennzeichnet,**
**dass** das Schwenkgetriebe ein Lenkergetriebe, insbesondere ein Parallellenkergetriebe ist.

8. Bedienarbeitsplatz (1) nach einem der Ansprüche 5 bis 7,
**dadurch gekennzeichnet,**
**dass** ein Getriebeglied des Schwenkgetriebes von einem Tragelement (21) der Armlehne (14) gebildet ist.

9. Bedienarbeitsplatz (1) nach einem der vorhergehenden Ansprüche,
**dadurch gekennzeichnet,**
**dass** die Verstelleinrichtung eine Arretiervorrichtung umfasst, die in der Weise ausgebildet ist, dass die Armlehne (14) in der Sitzbedienposition und/oder in der Stehbedienposition arretierbar ist.

10. Bedienarbeitsplatz (1) nach einem der vorhergehenden Ansprüche,
**dadurch gekennzeichnet,**
**dass** die Verstelleinrichtung eine Antriebsvorrichtung umfasst.

11. Bedienarbeitsplatz (1) nach Anspruch 10,
**dadurch gekennzeichnet,**
**dass** die Antriebsvorrichtung eine Zylinderkolbeneinheit (30, 31), insbesondere eine Gasdruckfeder (27), umfasst.

12. Bedienarbeitsplatz (1) nach einem der Ansprüche 10 oder 11,
**dadurch gekennzeichnet,**
**dass** die Antriebsvorrichtung gleichzeitig zur Arretierung der Armlehne (14) in der Stehbedienposition und/oder in der Sitzbedienposition ausgebildet ist.

13. Bedienarbeitsplatz (1) nach einem der Ansprüche 5 bis 8 und einem der Ansprüche 10 bis 12,
**dadurch gekennzeichnet,**
**dass** die Antriebsvorrichtung unmittelbar am Schwenkgetriebe angelenkt ist.

14. Bedienarbeitsplatz (1) nach einem der vorhergehenden Ansprüche,
**dadurch gekennzeichnet,**
**dass** Verstelleinrichtung in der Weise ausgebildet ist, dass die Positionierung der Sitzbedienposition und/oder der Stehbedienposition justierbar ist.

15. Bedienarbeitsplatz (1) nach einem der vorhergehenden Ansprüche,
**dadurch gekennzeichnet,**
**dass** ein Auslösehebel (29) an der Armlehne (14) angeordnet ist, dessen Betätigung die Verstellung zwischen der Sitzbedienposition und der Stehbedienposition und umgekehrt auslöst.

16. Baumaschine, insbesondere Fräsmaschine (2) zur Bearbeitung der Straßenoberfläche, mit einem Bedienarbeitsplatz (1) gemäß einem der Ansprüche 1 bis 15.

17. Baumaschine nach Anspruch 16,
**dadurch gekennzeichnet,**
**dass** der Bedienarbeitsplatz (1) gegenüber einem Maschinenrahmen (3) der Baumaschine schwingungsgedämpft ausgebildet ist.

18. Baumaschine nach einem der Ansprüche 16 oder 17,
**dadurch gekennzeichnet,**
**dass** der Bedienarbeitsplatz (1) in der Weise ausgebildet ist, dass der Sitz (11) zusammen mit der Armlehne (14) um eine Vertikalachse schwenkbar ist.

## Claims

1. An operator workplace (1) for a construction machine, especially a milling machine (2) for processing the road surface, having a seat (11), said seat comprising a seating surface (12) and having an armrest (14), which is arranged on a side of the seating surface (12) and includes an arm supporting surface (16) and at least one control element (17, 18, 19) arranged on the armrest (14) for controlling at least one machine function, an adjustment device being provided which is designed in such a manner that the armrest (14) is designed to be adjustable between a sitting operating position and a standing operating position which is elevated in a vertical direction relative to the sitting operating position,
**characterized in that**
in the standing operating position, the armrest (14) is, compared to the sitting operation position, forwardly offset in a horizontal direction relative to the seating surface (12).

2. The operator workplace (1) according to claim 1,
**characterized in that**
the adjustment device is designed in such a manner that the adjusting movement of the armrest (14) between the sitting operating position and the standing operating position occurs simultaneously with respect to height and in horizontal direction.

3. The operator workplace (1) according to any one of the preceding claims,
**characterized in that**
the adjustment device is arranged in such a manner that the armrest (14) is laterally adjustable.

4. The operator workplace (1) according to any one of the preceding claims,
**characterized in that**
the seating surface (12) is designed upwardly foldable about a horizontal axis and that the adjustment device is functionally coupled to the folding function of the seating surface (12) in such a manner that the armrest (14) will pivot from the standing operating position to the sitting operating position when the seating surface (12) is folded down, and vice versa.

5. The operator workplace (1) according to any one of the preceding claims,
**characterized in that**
the adjustment device comprises a pivot gear which is designed for performing a pivoting movement of the armrest (14), which movement is in a vertical plane.

6. The operator workplace (1) according to claim 5,
**characterized in that**
the pivot gear is a four-link gear.

7. The operator workplace (1) according to any one of claims 5 or 6,
**characterized in that**
the pivot gear is a link mechanism, especially a parallel link mechanism.

8. The operator workplace (1) according to any one of claims 5 to7,
**characterized in that**
a gear member of the pivot gear is formed by a support element (21) of the armrest (14).

9. The operator workplace (1) according to any one of the preceding claims,
**characterized in that**
the adjustment device comprises a locking apparatus, which is designed in such a manner that the armrest (14) can be locked in the sitting operating position and/or in the standing operating position.

10. The operator workplace (1) according to any one of the preceding claims,
**characterized in that**
the adjustment device comprises a drive apparatus.

11. The operator workplace (1) according to claim 10,
**characterized in that**
the drive apparatus comprises a cylinder/piston unit (30, 31), especially a gas pressure spring (27).

12. The operator workplace (1) according to any one of claims 10 or 11,
**characterized in that**
the drive apparatus is also designed for locking the armrest (14) in the standing operating position and/or in the sitting operating position.

13. The operator workplace (1) according to any one of claims 5 to 8 and to any one of claims 10 to 12,
**characterized in that**
the drive apparatus is hinged directly to the pivot gear.

14. The operator workplace (1) according to any one of the preceding claims,
**characterized in that**
the adjustment device is designed in such a manner that the positioning of the sitting operating position and/or the standing operating position is adjustable.

15. The operator workplace (1) according to any one of the preceding claims,
**characterized in that**
a triggering lever (29) is arranged on the armrest (14), the actuation of which triggers the adjustment between the sitting operating position and the standing operating position and vice versa.

16. A construction machine, especially a milling machine (2), for processing the road surface, having an operator workplace (1) according to any one of claims 1 to15.

17. The construction machine according to claim 16,
**characterized in that**
the operator workplace (1) is vibration-dampened relative to a machine frame (3) of the construction machine.

18. The construction machine according to any one of claims 16 or 17,
**characterized in that**
the operator workplace (1) is designed in such a manner that the seat (1) is pivotable about a vertical axis together with the armrest (14).

## Revendications

1. Poste de travail opérateur (1) pour un engin de chantier, en particulier un engin de fraisage (2) pour le traitement d'un revêtement routier, comprenant un siège (11), ledit siège comprenant une surface d'assise (12) et possédant un accoudoir (14) qui est agencé sur un côté de la surface d'assise (12) et comprend une surface (16) de support du bras et au moins un élément de commande (17, 18, 19) agencé sur l'accoudoir (14) pour commander au moins une fonction de l'engin, un dispositif de réglage étant présent, qui est conçu de telle façon que l'accoudoir (14) soit conçu pour être réglable entre une position d'utilisation assise et une position d'utilisation debout qui est surélevée verticalement par rapport à la position d'utilisation assise,
**caractérisé en ce que**
dans la position d'utilisation debout, l'accoudoir (14) est, comparé à la position d'utilisation assise, décalé vers l'avant dans une direction horizontale par rapport à la surface d'assise (12).

2. Poste de travail opérateur (1) selon la revendication 1,
**caractérisé en ce que**
le dispositif de réglage est conçu de telle façon que le mouvement de réglage de l'accoudoir (14) entre la position d'utilisation assise et la position d'utilisation debout se produise simultanément quant à la hauteur et dans la direction horizontale.

3. Poste de travail opérateur (1) selon l'une quelconque des revendications précédentes,
**caractérisé en ce que**
le dispositif de réglage est agencé de telle façon que l'accoudoir (14) soit réglable latéralement.

4. Poste de travail opérateur (1) selon l'une quelconque des revendications précédentes,
**caractérisé en ce que**
la surface d'assise (12) est conçue repliable vers le haut autour d'un axe horizontal et **en ce que** le dispositif de réglage est couplé fonctionnellement à la fonction de repliage de la surface d'assise (12) d'une façon telle que l'accoudoir (14) pivote de la position d'utilisation debout à la position d'utilisation assise lorsque la surface d'assise (12) est rabattue, et vice versa.

5. Poste de travail opérateur (1) selon l'une quelconque des revendications précédentes,
**caractérisé en ce que**
le dispositif de réglage comprend un mécanisme pivotant qui est conçu pour produire un mouvement pivotant de l'accoudoir (14), ledit mouvement se faisant dans un plan vertical.

6. Poste de travail opérateur (1) selon la revendication 5,
**caractérisé en ce que**
le mécanisme pivotant est un quadrilatère articulé.

7. Poste de travail opérateur (1) selon l'une quelconque des revendications 5 ou 6,
**caractérisé en ce que**
le mécanisme pivotant est un mécanisme à bras articulés, en particulier un mécanisme à bras articulés parallèles.

8. Poste de travail opérateur (1) selon l'une quelconque des revendications 5 à 7,
**caractérisé en ce que**
un élément de liaison du mécanisme pivotant est formé par un élément de support (21) de l'accoudoir (14).

9. Poste de travail opérateur (1) selon l'une quelconque des revendications précédentes,
**caractérisé en ce que**
l'élément de réglage comprend un dispositif de verrouillage, qui est conçu de telle manière que l'accoudoir (14) puisse être verrouillé dans la position d'utilisation assise et/ou dans la position d'utilisation debout.

10. Poste de travail opérateur (1) selon l'une quelconque des revendications précédentes,
**caractérisé en ce que**
le dispositif de réglage comprend un mécanisme d'entraînement.

11. Poste de travail opérateur (1) selon la revendication 10,
**caractérisé en ce que**
le mécanisme d'entraînement comprend une unité cylindre/piston (30, 31), en particulier un ressort pneumatique (27).

12. Poste de travail opérateur (1) selon l'une quelconque des revendications 10 ou 11,
**caractérisé en ce que**
le mécanisme d'entraînement est également conçu pour verrouiller l'accoudoir (14) dans la position d'utilisation debout et/ou dans la position d'utilisation assise.

13. Poste de travail opérateur (1) selon l'une quelconque des revendications 5 à 8, et selon l'une quelconque des revendications 10 à 12,
**caractérisé en ce que**
le mécanisme d'entraînement est directement articulé au mécanisme pivotant.

14. Poste de travail opérateur (1) selon l'une quelconque des revendications précédentes,
**caractérisé en ce que**
le dispositif de réglage est conçu de telle manière que le positionnement de la position d'utilisation assise et/ou de la position d'utilisation debout soit réglable.

15. Poste de travail opérateur (1) selon l'une quelconque des revendications précédentes,
**caractérisé en ce que**
un levier de déclenchement (29) est agencé sur l'accoudoir (14), levier dont l'actionnement déclenche le réglage entre la position d'utilisation assise et la position d'utilisation debout, et vice versa.

16. Engin de chantier, en particulier engin de fraisage (2), pour le traitement d'un revêtement routier, ayant un poste de travail opérateur (1) selon l'une quelconque des revendications 1 à 15.

17. Engin de chantier selon la revendication 16,
**caractérisé en ce que**
le poste de travail opérateur (1) est conçu avec un amortissement des vibrations à l'égard d'un châssis de machine (3) de l'engin de chantier.

18. Engin de chantier selon l'une quelconque des revendications 16 ou 17,
**caractérisé en ce que**
le poste de travail opérateur (1) est conçu de telle manière que le siège (11) peut pivoter autour d'un axe vertical en même temps que l'accoudoir (14).
